(19) Europäisches Patentamt / European Patent Office / Office européen des brevets

(11) **EP 2 715 122 B1**

(12) **EUROPEAN PATENT SPECIFICATION**

(45) Date of publication and mention
of the grant of the patent:
**11.07.2018 Bulletin 2018/28**

(21) Application number: **12724567.8**

(22) Date of filing: **30.05.2012**

(51) Int Cl.:
***F03D 7/02*** *(2006.01)*

(86) International application number:
**PCT/DK2012/050187**

(87) International publication number:
**WO 2012/163362 (06.12.2012 Gazette 2012/49)**

(54) **A METHOD OF CONTROLLING A WIND TURBINE**

VERFAHREN ZUR STEUERUNG EINER WINDTURBINE

PROCÉDÉ DE COMMANDE D'UNE ÉOLIENNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.06.2011 DK 201170281
03.06.2011 US 201161492820 P**

(43) Date of publication of application:
**09.04.2014 Bulletin 2014/15**

(73) Proprietor: **Vestas Wind Systems A/S
8200 Aarhus N (DK)**

(72) Inventors:
• **SPRUCE, Chris
Leatherhead
Surrey KT23 4PD (GB)**

• **GOODMAN, Jenny
Guildford
Surrey GU2 4EL (GB)**
• **HALES, Kelvin
Egham
Surrey TW20 9NB (GB)**

(74) Representative: **Vestas Patents Department
Hedeager 42
8200 Aarhus N (DK)**

(56) References cited:
| | |
|---|---|
| **EP-A1- 2 327 876** | **EP-A2- 2 138 717** |
| **US-A1- 2002 047 275** | **US-A1- 2007 003 403** |
| **US-A1- 2010 014 970** | |

**Description**

The present invention relates to a method of controlling a wind turbine. In particular it relates to a method of controlling lift regulating devices on a wind turbine rotor blade.

Modern wind turbines are controlled during operation in order to optimise the performance of the wind turbine in different operating conditions. The different operating conditions can arise from changes in wind speed, turbulence and wind gusts which are local fast variations in wind speed. These different operating conditions give rise to loads on wind turbine components, in particular the wind turbine rotor blades.

Loads on wind turbines can be divided into extreme loads and fatigue loads. If the fatigue loads are reduced, there is a reduction in cost and required materials for the wind turbine components. It is therefore desirable to reduce the fluctuating loads that the wind turbine blades experience.

Wind turbine rotor blades are subjected to aerodynamic loads, and these aerodynamic loads vary along the span of the rotor blade. The aerodynamic loads are affected by the velocity of the wind relative to the blade, along the span of the blade. The relative wind velocity at the blade fluctuates as the relative wind velocity comprises a periodic component (due to rotation of the rotor blades) and stochastic components from the local wind conditions.

It is well known to regulate the fatigue loads experienced by a wind turbine rotor blade by pitching the blades, which is achieved by turning the blades about their longitudinal axis in order to influence the aerodynamic angle of attack of the rotor blades.

Lift regulating devices, such as flaps, can alleviate the fatigue loads experienced by the blade by reducing the fluctuations in the aerodynamic loads, by reducing fluctuations in the lift force generated by the blade. In other words, at a particular spanwise location on a rotor blade, a flap can be controlled in order to smooth the lift generated at that spanwise location.

Wind turbine rotor blade flaps have been proposed that are controlled by sensing the local wind conditions at the flap and if a pocket of turbulence is detected for example, the flap is moved in order to smooth the lift generated at the location of the flap. However, a problem exists in that it may be too late for the flap to have any influence on the fluctuating aerodynamic loads that are caused by the pocket of turbulence.

US2007/003403 describes a wind turbine with an adjustable lift regulating device. The lift regulating device is configured so that the lift in outer part of a wind turbine rotor blade can be reduced at high wind speeds in order to reduce loads. EP2327876 describes a wind turbine with blades having an optical wind velocity measurement system and adjustable flow altering means which are controlled based on data from the optical wind velocity measurement system.

It is an aim of this invention to provide a method of controlling lift regulating devices so that they alleviate loads wind turbine rotor blades caused by local wind conditions.

According to a first aspect of the present invention there is provided a method of controlling a wind turbine as defined in claim 1.

According to the invention, the second lift regulating device on the second blade is controlled in dependence on the wind conditions detected by the first blade. With this method, the loads on a wind turbine, and in particular the blades, can be reduced as the lift regulating device is controlled to reduce loads on the blade at the correct moment in time, i.e. at a position in the rotor plane where there is a particular wind condition. The invention can also be used to increase the energy capture of the blades when the wind turbine is operating below its rated wind speed.

It should be noted that the lift regulating device on the second blade is not necessarily controlled solely in dependence on the wind conditions detected by the first blade. The second blade will also detect wind conditions as it rotates in the rotor plane, and the control of the second lift regulating device on the second blade may be based on step (a) and in dependence on the wind conditions that the second blade detects.

The "azimuth angle" is defined as the angular position in the rotor plane. When a blade is located at the top of the rotor plane pointing vertically upwards, this is an azimuth angle of zero and the azimuth angle is measured in a clockwise direction.

As a given blade passes through a given region of the rotor's swept area, the wind conditions in that region are determined. This data is then exploited to provide advance warning of the local wind conditions that the subsequent blade will experience when it hits the same region. In a three bladed wind turbine operating with a rotor rotational speed of 10 revolutions per minute, the second blade will hit the given region 2 seconds later than the first blade.

Preferably, step (a) further comprises detecting local wind conditions at the radial position of the first lift regulating device. The step of detecting local wind conditions at the radial position of the first lift regulating device may comprises measuring the wind speed at the radial position of the first lift regulating device.

The step of detecting local wind conditions at the radial position of the first lift regulating device may further comprise measuring an angle of attack at the radial position of the first lift regulating device.

The step of detecting local wind conditions at the radial position of the first lift regulating device may comprises measuring a force from the wind acting on the first lift regulating device by means of a sensor.

The first lift regulating device may be movable to alter the aerodynamic profile of the first blade, in order to alter the aerodynamic performance of the first blade; and the second lift regulating device may be movable to alter the aerodynamic profile of the second blade, in order to alter the aerodynamic performance of the second blade.

The method may further comprise determining a new position of the second lift regulating device in dependence on the wind conditions detected during step (a); and wherein step (c) comprises controlling the second lift regulating device so that it is moved to the determined new position as the second blade passes through the azimuth angle.

Step (c) may further comprise controlling the second lift regulating device such that it is moved to the determined new position in advance of the second blade passing through the azimuth angle.

The method may further comprise controlling a pitch position of the second blade in dependence on the wind conditions detected during step (a) as the second blade passes through the azimuth angle.

The first lift regulating device may be at substantially the same radial position as the second lift regulating device.

Preferably, the first and second blades each comprise a plurality of lift regulating devices spaced in a radial direction, wherein each lift regulating device on the first blade is associated with a lift regulating device on the second blade at a corresponding radial position; wherein step (a) further comprises detecting, at the azimuth angle, a wind condition at each of the radial positions of the plurality of lift regulating devices as the first blade passes through the azimuth angle; and step (c) further comprises controlling the plurality of lift regulating devices on the second blade such that each lift regulating device is controlled in dependence on the wind conditions detected during step (a) at the corresponding radial positions, as the second blade passes through the azimuth angle.

The first and second blades each may comprise a plurality of lift regulating devices spaced in a radial direction, wherein each lift regulating device on the first blade is associated with a lift regulating device on the second blade at a corresponding radial position and a plurality of annuli are defined for the plurality of lift regulating devices, wherein step (b) may comprise generating a plurality of model of the wind conditions for each annuli based on detected wind conditions in each annuli; and step (c) comprises controlling the first and second lift regulating devices in dependence on the models of the wind conditions.

The detected local wind conditions may comprise at least one of: wind speed, turbulence intensity, wind shear, air density.

The rotor may comprise a third blade having a third lift regulating device, the method further comprising the steps of: (e) detecting wind conditions at the azimuth angle as the second blade passes through the azimuth angle; and (f) controlling the third lift regulating device on the third blade in dependence on the wind conditions detected during step (a) and step (e) as the third blade passes through the azimuth angle.

The lift regulating devices may be one of a trailing edge flap, a leading edge flap, an aileron, a spoiler. Alternatively, the lift regulating devices may comprise fluid ejection or suction means arranged to eject or suck fluid from a surface of the first and second blade in order to alter the aerodynamic performance of the first and second blades.

The invention will now be described, by way of example only with reference to the accompanying Figures in which:

Figure 1 is a front view of a wind turbine;
Figure 2a is a plan view of a wind turbine blade according to the invention;
Figures 2b and 2c are cross sectional views along the line A-A in Figure 2a;
Figure 3 is a cross section view of a wind turbine rotor blade according to the invention;
Figure 4 is a front view of a wind turbine according to the invention; and
Figure 5 is a schematic view of a controller according to the invention.
Figures 6a, 6b and 6c are cross sectional views of a wind turbine rotor blade according to the invention;
Figures 7, 8 and 9 are front views of a wind turbine according to the invention.

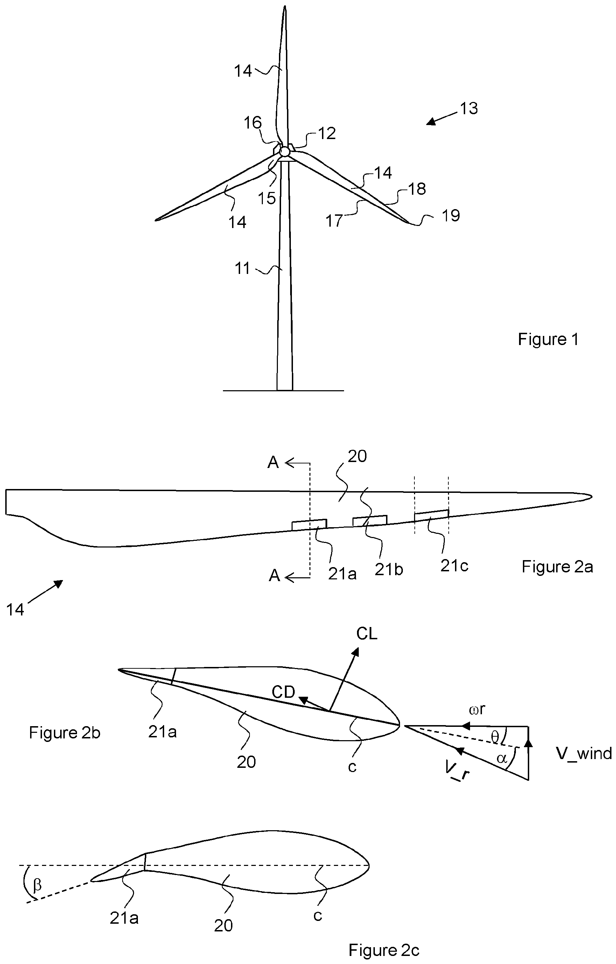

Figure 1 shows a horizontal axis wind turbine 10 according to the invention. The turbine comprises a tower 11 which supports a nacelle 12. The wind turbine 10 comprises a rotor 13 made up of three blades 14 each having a root end 15 mounted on a hub 16. Each blade 14 comprises a leading edge 17, a trailing edge 18, and a tip 19. As is well known in the art, each blade 14 can pitch about its own pitch axis which extends longitudinally along the span of the blade.

Figure 2a illustrates a blade 14 according to the invention. The blade 14 comprises a blade body 20 and three lift regulating devices which in this example are trailing edge flaps 21a, 21b and 21c (collectively referred to as 21). The flaps 21 are connected to the blade body and spaced along the span of the blade for modifying the aerodynamic surface or shape of the rotor blade. In use, when the turbine is generating power, the flaps 21 are actuated so that they deflect, in order to reduce the loads experienced by the wind turbine 1.

A blade section is herein defined as the section of the blade that contains the flap. For example, the blade section around flap 21c is illustrated by the dashed pair of lines.

Figure 2b is a cross section showing the blade's aerodynamic profile along the line A-A in Figure 2a. The resultant wind velocity $V_r$ at a blade section is a combination of the free wind velocity $V_{wind}$ and the rotational speed $\omega r$ of the blade 14 at that radial location (assuming the blade is not vibrating and that the nacelle is steady). The resultant wind velocity V_r is at an angle to the chord c of the blade profile and this is the angle of attack $\alpha$. The pitch angle $\theta$ is the angle between the chord c and the rotor plane. The pitch angle $\theta$ is set for the whole blade 14 by rotating the blade about its longitudinal axis. A lift coefficient for the blade section illustrated is defined as CL and a drag coefficient for the blade section is defined as CD where CL and CD are a dimensionless lift coefficient and a dimensionless drag coefficient where:

$$CL = L / 0.5\rho Vr^2 A \qquad \text{and} \qquad CD = D / 0.5\rho Vr^2 A$$

Where L is the lift force at the blade section; D is the drag force at the blade section; $\rho$ is the air density at the blade section; Vr is the resultant wind velocity at the blade section and A is the planform area of the blade section that contains the flap.

Figure 2b is a cross section showing the blade profile along the line A-A in Figure 2a showing the flap 21a deflected. As can be seen the flap is deflected an angle $\beta$ relative to the chord line. Moving the flap to different angles changes the CL and CD at the blade section to alter the aerodynamic performance of the blade. Therefore, the aerodynamic loads experienced by the blade can be regulated by moving the flap 21 in order to smooth out fluctuations in the lift force, where the fluctuations may be caused by local wind conditions.

Although three trailing edge flaps 21 are shown, it should be appreciated that there may be a number fewer or a greater number of trailing edge flaps. For example, there may be a single trailing edge flap 21 per blade 14. The flaps are actuated by actuation means not shown, the actuation means may include electronic actuators, piezo-electric actuators or pneumatic actuators such as described in our co-pending patent application PCT/EP2009/063402.

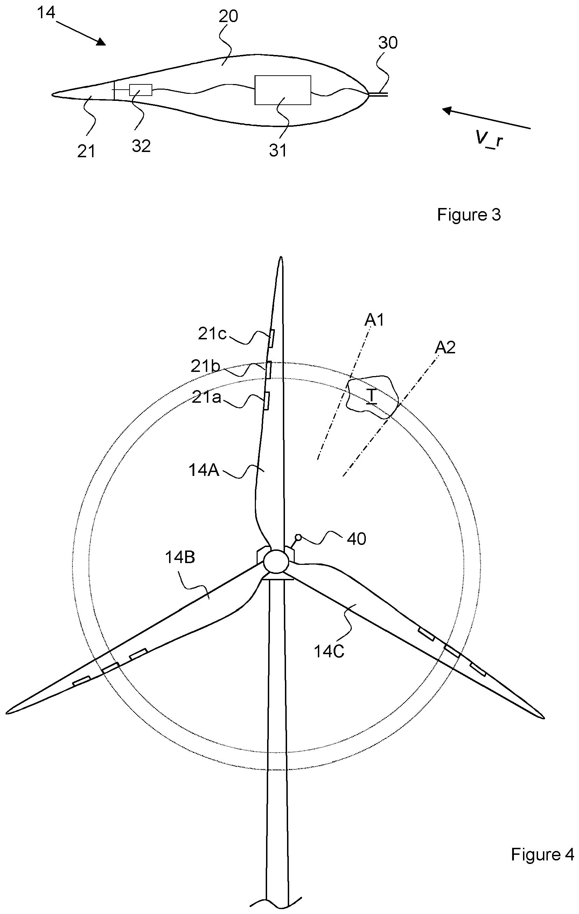

Figure 3 shows a cross section of the blade 14 at a flap location. At the leading edge of the blade there is a five hole pitot tube which can measure the wind speed Vr and the angle of attack $\alpha$. Knowing the wind speed and the angle of attack at the blade section, the local wind conditions at that blade section can be determined by a controller 31. Once the local wind conditions at the blade section have been determined, a signal is sent to an actuator 32 which moves the flap 21 to reduce undesired aerodynamic loads which may be caused by the local wind conditions.

As can be seen in Figure 4, an anemometer 40 is located on the nacelle 12 for measuring wind speed incident on the rotor 13. The wind acting on the anemometer is disturbed by the rotor 13 so to provide a measure of free stream (undisturbed) flow, a function is applied to the wind speed measured by the anemometer to provide an estimation of the free stream wind speed.

The pitot tube 30 detects the local wind at the blade station, i.e. it detects the wind conditions in the proximity of the flap 21. As can be seen in Figure 4, for the middle of the three illustrated flaps, the pitot tube detects the local wind conditions in an annulus depicted by the dotted lines. In the example shown in Figure 4, a pocket of high turbulence intensity is present as shown in the area T, and this pocket of turbulence will be sensed by the pitot tube in front of the central flap.

The pitot tube 30 and the controller 31 can determine if the following local wind conditions are present at certain radial positions and azimuth angles in the rotor plane:

- High turbulence intensity, where turbulence intensity is defined as the standard deviation of the local wind velocity, based on a mean value of the local wind velocity.
- Low turbulence intensity.
- Wind shear (both positive and negative), by comparing the local wind velocity with the free stream velocity as measured by the anemometer 40.
- Tower shadow, which causes a local wind condition when a blade sweeps past the tower.
- Pockets of high and low wind speed, compared to the free stream velocity.
- Wake effects, caused by other wind turbines that are upstream.
- Low level jets (such as in the USA Mid-West).

According to the invention, each flap is controlled depending on the local wind conditions sensed by the sensor associated with that flap, but also sensors on one or more of the other blades as well.

Figure 4 shows a region of high turbulence T just in front of blade 14A between azimuth angles A1 and A2. As blade 14A passes clockwise through this region, it will experience the turbulence and the flap 21b will activate accordingly. The blade 14A may also pitch in order to reduce the loads on the blade. As soon as the blade 14A rotates through region T, the information about region T's wind conditions is passed to blade 14B. Then the control of blade 14B is modified accordingly, by activating the flap 21b on blade 14B before it reaches azimuth angle A1. The pitch on blade 14B may also be controlled to account for the turbulence before the blade 14B rotates to azimuth angle A1.

The local wind conditions sensed by blade 14A can also be passed to blade 14C as well as blade 14B, in order to improve the control of the flaps on blade 14C. In other words, the detected wind conditions are passed continuously from blade to blade.

The high turbulence area T is just an example, and in practice the swept area is made up of a number of regions all connected together. In an example, the annulus defined by the dotted lines may be pre-divided into angular segments of say 36 degrees each so that there are 10 segments in the rotor plane. The local wind conditions are detected in each of the ten segments and the detected wind conditions are passed to the following blades, so that the flaps on the following blades can be controlled before the blades reach a particular local wind condition.

By passing the detected wind conditions from blade to blade, it is now possible for the flaps on a blade to be actuated before the blade arrives at a particular local wind condition in order to avoid undesired loading on the blade.

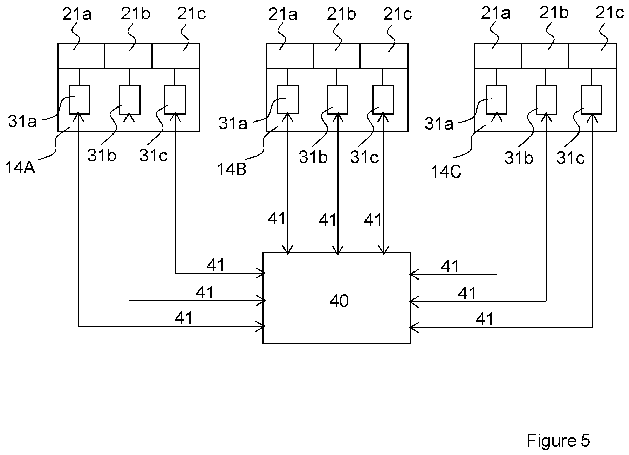

Figure 5 shows schematically how the three blades 14A, 14B and 14C are connected. Each flap 21a, 21b and 21c on each blade has a respective controller 31a, 31b and 31c that determines the local wind conditions at the blade section of the flap. As described above, the controller 31 sends a signal to an actuator to control its respective flap based on the wind conditions that the controller has determined exist, as well as the wind conditions detected by the controllers on the other two blades. A signal which gives information on the local wind conditions is sent by each controller 31 on each blade to a central control unit 40 via a data cable 41. Each controller, 31a, 31b and 31c on each blade 14A, 14B and 14C sends data on the local wind conditions to the central control unit 40 via a respective data cable 41. Within the central control unit 40, the data on the local wind conditions are processed. Each data cable 41 is two way such that the data about a local wind condition at an azimuth angle at a particular blade section for a first blade is sent to the second and third blade that will subsequently sweep through that azimuth angle.

Although an individual controller 31a, 31b and 31c has been shown for each flap 21a, 21b and 21c, the skilled person will appreciate that a single controller may be used for each blade. In addition, the data cables 41 may be replaced with a wireless communication system in order to avoid the risk of lightning strikes that may occur with conductive cables. The central control unit 40 may be located in the nacelle, or in one of the blades.

A predictor, such as a Kalman filter can also be used to estimate the local wind conditions. The Kalman filter is used to estimate the local wind conditions based on the measurements from blade sensors (such as the pitot tubes, strain gauges and accelerometers) and the model. These estimated wind conditions can then be used to control the next blade when it will pass at the same azimuth angle.

The invention has been described with respect to pitot tube sensors detecting the wind conditions at the leading edges of the blades. However, other sensing systems could be used to detect the wind conditions in front of the blade. These other sensing systems could include:

- Ultrasonic sensors to detect the wind speed in front of the blade.
- Static pressure taps arrange around the aerodynamic profile of the blade to measure the pressure distribution and from this determine the local wind speed and angle of attack.
- Using the flap itself as a sensor. In this instance, the flap rotates around a hinge, and by measuring the forces acting on the hinge, it is possible to calculate the aerodynamic forces acting on the flap and from this, the local wind conditions can be determined.

In a further implementation of the invention, the wind condition data is collected from all three blades and is used to build up a model of the wind across the whole region swept by the sensors.

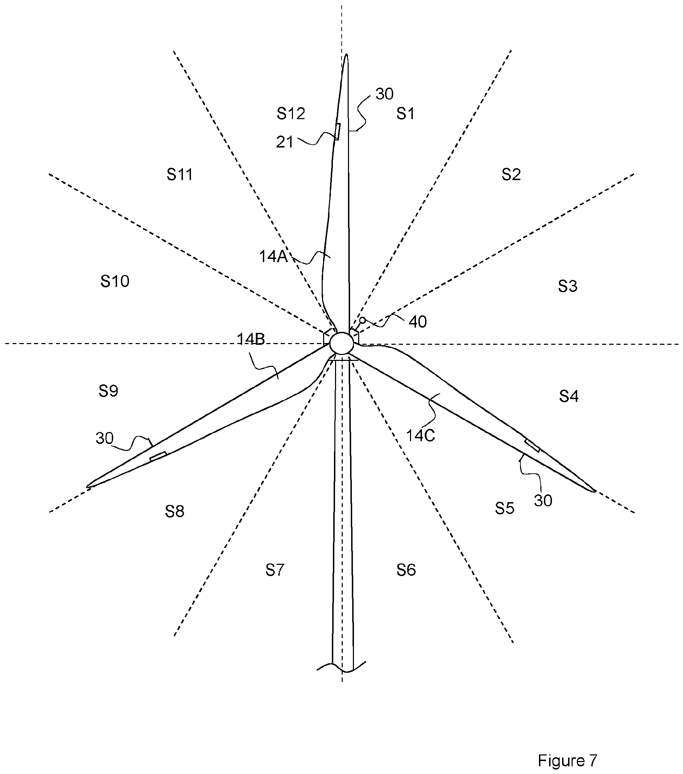

In an example of such a model, the rotor plane is divided into 12 segments (S1 to S12) of 30 degrees each as shown in Figure 7. As the first blade 14A passes through a sector S1, the mean wind speed in that first sector is logged and as the first blade 14A passes through a sector S2, the mean wind speed in that second sector is logged, and so on for all 12 segments. A interpolation of the mean wind speed is generated based on the logged mean wind speeds through the twelve sectors. This interpolation, which may be a linear interpolation, is used to control the second following blade 14B. In particular the linear interpolation results in a function and then the second blade 14B is controlled based on that linear interpolation function. With all three blades logging mean wind speeds the generated function will become more accurate.

As shown in Figure 7, in this example, there is one flap 21 per blade 14A, 14B and 14C. The model is built up for each of the twelve sectors S1 to S12 which is continuously updated as the rotor blades rotates. The model of the wind conditions can also include all of the local wind conditions listed above as well as the free stream wind speed and a turbulence intensity as measured by the anemometer on the nacelle. The flaps and/or the pitch of the blades can then be controlled based on the model of the wind field before a given rotor blade enters a region of a particular wind condition. An estimate of the wind conditions can be calculated as a function of the azimuth angle, time, and the radial position in the rotor plane. In addition, the model of the wind field can also use other data to improve the quality of the model, and such data may come from, for example, strain gauges or accelerometers on the blades indicating what loads the blades are under and a LIDAR unit providing data on the wind speed and direction far in front of the wind turbine.

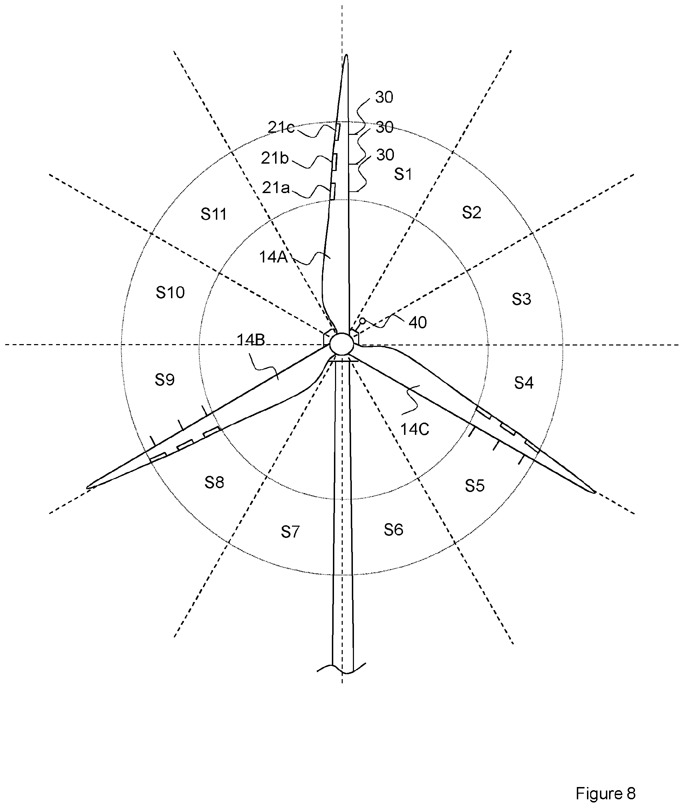

This area swept by the flaps is an annulus that includes the pitot sensors as shown in the example of Figure 8. The model of the wind across the region is then built up for this annulus by a pitot tube 30 for each flap. However, three annuli could be defined, with one annulus for each flap 21 which is defined by the swept area of the flap. When three annuli are used, there will be a model generated for each annulus and so the control of the flaps 21 will be based on wind conditions with a higher level of precision.

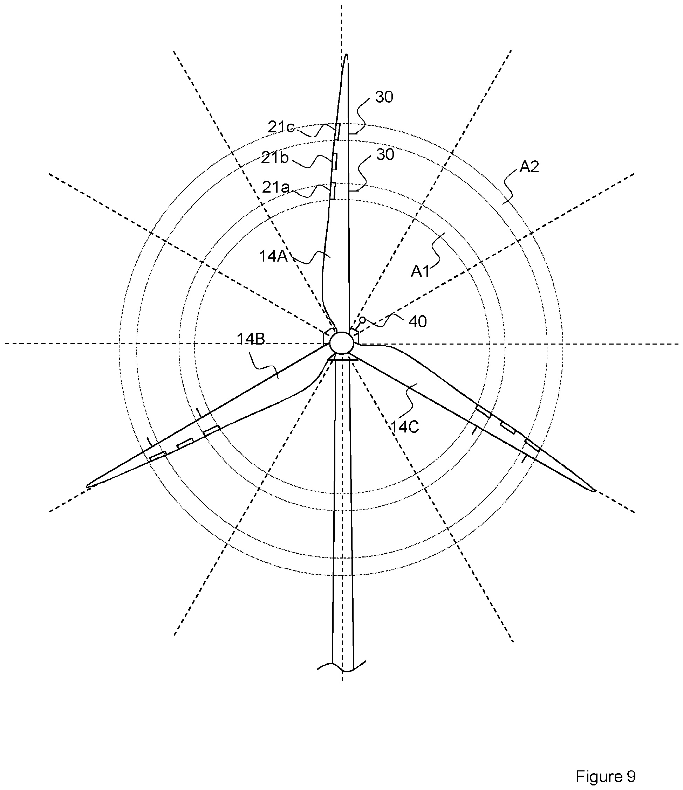

As shown in the example of Figure 9, there are three flaps 21a, 21b and 21c. However, the flaps 21b on each blade do not have a pitot tube associated with them. A model of the wind is generated for the annuli A1 and A2 associated with flaps 21a and 21c, i.e. there is a separate wind model for each of the annuli A1 and A2. The wind models for the two annuli A1 and A2 can be interpolated to provide an estimated wind model for the region swept by flap 21b. An advantage of this is that costs are saved by having fewer pitot tubes 30.

In a further example, only blade 14A has a pitot tube 30 associated with each flap 21a, 21b and 21c. The blades 14B and 14C do not have any wind sensors. In this example, the model of the wind is built up by one "intelligent" blade and the flaps on the other blades are controlled according to the model generated by the intelligent blade.

Just one example of generating the model or models is given above based on a linear interpolation method. However, other models may be also be generated through a set of equations where parameters in the equations are updated based on information from the pitot tubes 30.

The trailing edge flaps described above can be used to reduce the loads of a turbine under a range of conditions. However, when a wind turbine is either in idling or in shutdown mode the flap system may lose power and cannot operate. This potentially leaves the turbine exposed to high-risk wind loads without the best possible means of counteracting them. However, power can be supplied to the flap systems under shutdown conditions via a battery fitted within the structure of the wind turbine. This will be charged up during normal operation and only used when power is lost to the flap actuation systems. It would be an intelligent system, only operating in high-wind speed, high turbulence or rapidly changing wind direction scenarios rather than wasting energy when flaps are not required.

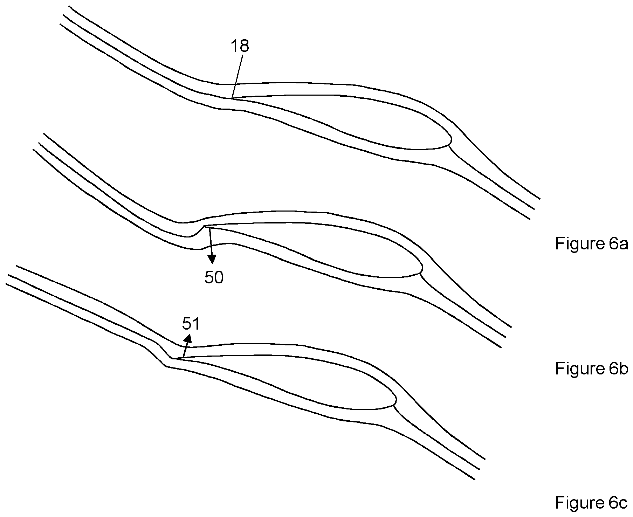

In a another example, instead of trailing edge flaps being used to alter the aerodynamic performance of the blade, blowing or suction is used to alter the aerodynamic performance. This is achieved by changing the effective camber of the blade profile. The camber, or mean camber line, of a airfoil profile is the curvature which is defined by a line halfway between the upper and lower surfaces of the airfoil profile. The camber of an airfoil profile affects air flow over the airfoil and therefore the lift generated by the airfoil. However, if a device affects the airflow over the airfoil without changing the physical geometry of the airfoil profile, it is referred to herein as a change in the effective camber. Figures 6a, 6b and 6c show how jets 50 and 51 are used in place of a trailing edge flap in order to alter the aerodynamic performance. A hole (not shown) is provided in the vicinity of the trailing edge 18 of the blade profile through which a jet of air is ejected or blown in order to modify the effective camber of the blade section. Figure 6a illustrates typical streamlines around the blade section in a reference case without blowing. Figure 6b illustrates the jet 50 on the pressure side of the blade profile blowing and it can be seen that the effective camber line is shifted to generate higher lift. Figure 6c illustrates the jet 51 on the suction side of the blade section 10 blowing and the effective camber line is shifted to generate lower lift. It is also possible to modify the effective camber line by using suction instead of jets.

In a further example, a plasma actuator may be used in place of the trailing edge flap. Plasma actuators generate an "electric wind" between their electrodes. In this example, a pair of electrodes are provided on the suction side of the blade profile in the vicinity of the trailing edge 18 and a pair of electrodes are provided on the pressure side of the blade profile in the vicinity of the trailing edge. When a voltage is applied between the pairs of electrodes, a plasma is formed generating an "electric wind" which will affect the lift generation of the blade profile.

**Claims**

1. A method of controlling a wind turbine (10) having a rotor (13) for rotation in a rotor plane, the rotor comprising: a first blade (14A) having a first lift regulating device (21a) adjustable to alter the aerodynamic performance of the first blade; and a second blade (14B) having a second lift regulating device (21a) adjustable to alter the aerodynamic performance of the second blade, wherein a radial position of the first and second lift regulating devices and the area swept by the first and second lift regulating devices defines an annulus in the rotor plane; the method comprising the steps of:

(a) detecting wind conditions in the annulus at an azimuth angle as the first blade (14A) and the second blade (14B) pass through the azimuth angle, the wind conditions being detected by a sensor on the first blade and a sensor on the second blade;
(b) generating a model of the wind conditions in the annulus, across the whole region swept by the sensors, based on the detected wind conditions in the annulus;
(c) controlling the first and second lift regulating device on the first (14A) and second blade (14B) in dependence on the wind conditions detected during step (a) as the blades pass through the azimuth angle by controlling the first and second lift regulating devices in dependence on the model of the wind conditions.

2. A method according to claim 1, wherein step (a) further comprises detecting local wind conditions at the radial position of the first lift regulating device (21a).

3. A method according to claim 2, wherein the step of detecting local wind conditions at the radial position of the first lift regulating device (21a) comprises:
measuring the wind speed at the radial position of the first lift regulating device.

4. A method according to claim 3, wherein the step of detecting local wind conditions at the radial position of the first lift regulating device (21a) further comprises:
measuring an angle of attack at the radial position of the first lift regulating device.

5. A method according to claim 2, wherein the step of detecting local wind conditions at the radial position of the first lift regulating device (21a) comprises:
measuring a force from the wind acting on the first lift regulating device by means of a sensor.

6. A method according to any of the preceding claims, wherein the first lift regulating device (21a) is movable to alter the aerodynamic profile of the first blade, in order to alter the aerodynamic performance of the first blade; and
the second lift regulating device is movable to alter the aerodynamic profile of the second blade, in order to alter the aerodynamic performance of the second blade.

7. A method according to claim 6, further comprising:

determining a new position of the second lift regulating device (21a) in dependence on the wind conditions detected during step (a); and wherein
step (c) comprises controlling the second lift regulating device so that it is moved to the determined new position as the second blade (14B) passes through the azimuth angle.

8. A method according to claim 7, wherein step (c) further comprises controlling the second lift regulating device (21a) such that it is moved to the determined new position in advance of the second blade (14B) passing through the azimuth angle.

9. A method according to any one of the preceding claims, further comprising the step of:
(d) controlling a pitch position of the second blade (14B) in dependence on the wind conditions detected during step (a) as the second blade passes through the azimuth angle.

10. A method according to any one of the preceding claims, wherein the first lift regulating device is at substantially the same radial position as the second lift regulating device.

11. A method according to any one of the preceding claims, wherein the first (14A) and second blades (14B) each comprise a plurality of lift regulating devices (21a, 21b, 21c) spaced in a radial direction, wherein each lift regulating device on the first blade (14A) is associated with a lift regulating device on the second blade (14B) at a corresponding radial position; wherein

step (a) further comprises detecting, at the azimuth angle, a wind condition at each of the radial positions of the plurality of lift regulating devices as the first blade passes through the azimuth angle; and
step (c) further comprises controlling the plurality of lift regulating devices on the second blade such that each lift regulating device is controlled in dependence on the wind conditions detected during step (a) at the corresponding radial positions, as the second blade passes through the azimuth angle.

12. A method according to claim 1, wherein the first (14A) and second blades (14B) each comprise a plurality of lift regulating devices (21a, 21b, 21c) spaced in a radial direction, wherein each lift regulating device on the first blade (14A) is associated with a lift regulating device on the second blade (14B) at a corresponding radial position and a plurality of annuli are defined for the plurality of lift regulating devices, wherein step (b) comprises generating a plurality of model of the wind conditions for each annuli based on detected wind conditions in each annuli; and step (c) comprises
controlling the first and second lift regulating devices in dependence on the models of the wind conditions.

13. A method according to any one of claims 2 to 12, wherein the detected local wind conditions comprise at least one of: wind speed, turbulence intensity, wind shear, air density.

14. A method according to any one of the preceding claims, wherein the rotor comprises a third blade (14c) having a third lift regulating device, the method further comprising the steps of:

(e) detecting wind conditions at the azimuth angle as the second blade passes through the azimuth angle; and
(f) controlling the third lift regulating device on the third blade in dependence on the wind conditions detected during step (a) and step (e) as the third blade passes through the azimuth angle.

15. A method according to any one of the preceding claims, wherein the lift regulating devices are one of a trailing edge flap, a leading edge flap, an aileron, a spoiler.

**Patentansprüche**

1. Verfahren zur Steuerung einer Windturbine (10) mit einem Rotor (13) zur Drehung in einer Rotorebene, wobei der Rotor umfasst: eine erstes Blatt (14A) mit einer ersten Hubreguliervorrichtung (21a), die einstellbar ist, um die aerodynamische Leistung des ersten Blatts zu ändern; und ein zweites Blatt (14B) mit einer zweiten Hubreguliervorrichtung (21a), die einstellbar ist, um die aerodynamische Leistung des zweiten Blatts zu ändern, wobei eine radiale Position der ersten und der zweiten Hubreguliervorrichtung und die von der ersten und der zweiten Hubreguliervorrichtung überstrichene Fläche einen Ring in der Rotorebene definieren; wobei das Verfahren die Schritte umfasst:

(a) Detektieren von Windbedingungen in dem Ring bei einem Azimutwinkel, wenn das erste Blatt (14A) und das zweite Blatt (14B) den Azimutwinkel durchlaufen, wobei die Windbedingungen durch einen Sensor an dem ersten Blatt und einen Sensor an dem zweiten Blatt detektiert werden;
(b) Erzeugen eines Modells der Windbedingungen in dem Ring über den gesamten von den Sensoren überstrichenen Bereich basierend auf den detektierten Windbedingungen in dem Ring;
(c) Steuern der ersten und der zweiten Hubreguliervorrichtung an dem ersten (14A) und dem zweiten Blatt (14B) in Abhängigkeit von den in Schritt (a) detektierten Windbedingungen, wenn die Blätter durch Steuern der ersten und der zweiten Hubreguliervorrichtung den Azimutwinkel durchlaufen, in Abhängigkeit von dem Modell der Windbedingungen.

2. Verfahren nach Anspruch 1, wobei Schritt (a) weiter das Detektieren lokaler Windbedingungen an der radialen Position der ersten Hubreguliervorrichtung (21a) umfasst.

3. Verfahren nach Anspruch 2, wobei der Schritt des Detektierens lokaler Windbedingungen an der radialen Position der ersten Hubreguliervorrichtung (21a) umfasst:
Messen der Windgeschwindigkeit an der radialen Position der ersten Hubreguliervorrichtung.

4. Verfahren nach Anspruch 3, wobei der Schritt des Detektierens lokaler Windbedingungen an der radialen Position der ersten Hubreguliervorrichtung (21a) weiter umfasst:
Messen eines Anstellwinkels an der radialen Position der ersten Hubreguliervorrichtung.

5. Verfahren nach Anspruch 2, wobei der Schritt des Detektierens lokaler Windbedingungen an der radialen Position der ersten Hubreguliervorrichtung (21a) umfasst:
Messen einer Kraft von dem auf die erste Hubregeliervorrichtung wirkenden Wind mittels eines Sensors.

6. Verfahren nach einem der vorstehenden Ansprüche, wobei die erste Hubreguliervorrichtung (21a) beweglich ist, um das aerodynamische Profil des ersten Blatts zu ändern, um die aerodynamische Leistung des ersten Blatts zu ändern; und
die zweite Hubreguliervorrichtung beweglich ist, um das aerodynamische Profil der zweiten Blatt zu ändern, um die aerodynamische Leistung des zweiten Blatts zu ändern.

7. Verfahren nach Anspruch 6, weiterhin umfassend:

Bestimmen einer neuen Position der zweiten Hubreguliervorrichtung (21a) in Abhängigkeit von den während des Schrittes (a) detektierten Windbedingungen; und wobei
Schritt (c) das Steuern der zweiten Hubreguliervorrichtung umfasst, so dass sie zu der bestimmten neuen Position bewegt wird, wenn das zweite Blatt (14B) den Azimutwinkel durchläuft.

8. Verfahren nach Anspruch 7, wobei Schritt (c) weiter das Steuern der zweiten Hubreguliervorrichtung (21a) umfasst, so dass sie vor dem Durchlaufen des Azimutwinkels durch das zweite Blatt (14B) zu der bestimmten neuen Position bewegt wird.

9. Verfahren nach einem der vorstehenden Ansprüche, weiter umfassend den Schritt:
(d) Steuern einer Nickposition des zweiten Blatts (14B) in Abhängigkeit von den Windbedingungen, die während Schritt (a) detektiert werden, wenn das zweite Blatt den Azimutwinkel durchläuft.

10. Verfahren nach einem der vorstehenden Ansprüche, wobei die erste Hubreguliervorrichtung im Wesentlichen die gleiche radiale Position wie die zweite Hubreguliervorrichtung aufweist.

11. Verfahren nach einem der vorstehenden Ansprüche, wobei das erste (14A) und das zweite Blatt (14B) jeweils mehrere Hubreguliervorrichtungen (21a, 21b, 21c) umfassen, die in einer radialen Richtung beabstandet sind, wobei jede Hubregulierungsvorrichtung an dem ersten Blatt (14A) einer Hubreguliervorrichtung an dem zweiten Blatt (14B) an einer entsprechenden radialen Position zugeordnet ist; wobei

Schritt (a) weiter das Detektieren eines Windzustands an jeder der radialen Positionen der mehreren Hubreguliervorrichtungen bei dem Azimutwinkel, wenn das erste Blatt den Azimutwinkel durchläuft, umfasst; und
Schritt (c) weiter das Steuern der mehreren Hubreguliervorrichtungen an dem zweiten Blatt derart, dass jede Hubreguliervorrichtung in Abhängigkeit von den Windbedingungen gesteuert wird, die während Schritt (a) an den entsprechenden radialen Positionen detektiert werden, wenn das zweite Blatt den Azimutwinkel durchläuft, umfasst.

12. Verfahren nach Anspruch 1, wobei das erste (14A) und das zweite Blatt (14B) jeweils mehrere Hubreguliervorrichtungen (21a, 21b, 21c) umfassen, die in einer radialen Richtung beabstandet sind, wobei jede Hubreguliervorrichtung an dem ersten Blatt (14A) einer Hubreguliervorrichtung an dem zweiten Blatt (14B) an einer entsprechenden radialen Position zugeordnet ist, und mehrere Ringen für die mehreren Hubreguliervorrichtungen definiert sind, wobei Schritt (b) das Erzeugen mehrerer Modelle der Windbedingungen für jeden Ring basierend auf detektierten Windbedingungen in jedem Ring umfasst; und Schritt (c) das Steuern der ersten und der zweiten Hubreguliervorrichtung in Abhängigkeit von den Modellen der Windbedingungen umfasst.

13. Verfahren nach einem der Ansprüche 2 bis 12, wobei die detektierten lokalen Windbedingungen mindestens eines von Folgendem umfassen: Windgeschwindigkeit, Turbulenzintensität, Windscherung, Luftdichte.

14. Verfahren nach einem der vorstehenden Ansprüche, wobei der Rotor ein drittes Blatt (14c) umfasst, das eine dritte Hubreguliervorrichtung aufweist, wobei das Verfahren weiter die folgenden Schritte umfasst:

(e) Detektieren von Windbedingungen an dem Azimutwinkel, wenn das zweite Blatt den Azimutwinkel durchläuft; und
(f) Steuern der dritten Hubreguliervorrichtung an dem dritten Blatt in Abhängigkeit von den Windbedingungen, die während Schritt (a) und Schritt (e) detektiert werden, wenn das dritte Blatt den Azimutwinkel durchläuft.

15. Verfahren nach einem der vorstehenden Ansprüche, wobei die Hubreguliervorrichtungen eines von einer Hinterkantenklappe, einer Vorderkantenklappe, einem Querruder, oder einem Spoiler ist.

**Revendications**

1. Procédé de commande d'une éolienne (10) ayant un rotor (13) pour une rotation dans un plan de rotor, le rotor comprenant : une première pale (14A) ayant un premier dispositif de régulation de portance (21a) ajustable pour modifier la performance aérodynamique de la première pale ; et une deuxième pale (14B) ayant un deuxième dispositif de régulation de portance (21a) ajustable pour modifier la performance aérodynamique de la deuxième pale, dans lequel une position radiale des premier et deuxième dispositifs de régulation de portance et de la zone balayée par les premier et deuxième dispositifs de régulation de portance définit un espace annulaire dans le plan de rotor ; le procédé comprenant les étapes consistant à :

(a) détecter des conditions de vent dans l'espace annulaire à un angle d'azimut quand la première pale (14A) et la deuxième pale (14B) passent à travers l'angle d'azimut, les conditions de vent étant détectées par un capteur sur la première pale et un capteur sur la deuxième pale ;

(b) générer un modèle des conditions de vent dans l'espace annulaire, à travers toute la région balayée par les capteurs, sur la base des conditions de vent détectées dans l'espace annulaire ;

(c) commander les premier et deuxième dispositifs de régulation de portance sur les première (14A) et deuxième pales (14B) en fonction des conditions de vent détectées durant l'étape (a) quand les pales passent à travers l'angle d'azimut en commandant les premier et deuxième dispositifs de régulation de portance en fonction du modèle des conditions de vent.

2. Procédé selon la revendication 1, dans lequel l'étape (a) comprend en outre la détection de conditions de vent locales à la position radiale du premier dispositif de régulation de portance (21a).

3. Procédé selon la revendication 2, dans lequel l'étape de détection de conditions de vent locales à la position radiale du premier dispositif de régulation de portance (21a) comprend :
la mesure de la vitesse du vent à la position radiale du premier dispositif de régulation de portance.

4. Procédé selon la revendication 3, dans lequel l'étape de détection de conditions de vent locales à la position radiale du premier dispositif de régulation de portance (21a) comprend en outre :
la mesure d'un angle d'attaque à la position radiale du premier dispositif de régulation de portance.

5. Procédé selon la revendication 2, dans lequel l'étape de détection de conditions de vent locales à la position radiale du premier dispositif de régulation de portance (21a) comprend :
la mesure d'une force provenant du vent agissant sur le premier dispositif de régulation de portance à l'aide d'un capteur.

6. Procédé selon l'une quelconque des revendications précédentes, dans lequel le premier dispositif de régulation de portance (21a) est mobile pour modifier le profil aérodynamique de la première pale, afin de modifier la performance aérodynamique de la première pale ; et
le deuxième dispositif de régulation de portance est mobile pour modifier le profil aérodynamique de la deuxième pale, afin de modifier la performance aérodynamique de la deuxième pale.

7. Procédé selon la revendication 6, comprenant en outre :

la détermination d'une nouvelle position du deuxième dispositif de régulation de portance (21a) en fonction des conditions de vent détectées durant l'étape (a) ; et dans lequel
l'étape (c) comprend la commande du deuxième dispositif de régulation de portance de telle sorte qu'il est déplacé jusqu'à la nouvelle position déterminée quand la deuxième pale (14B) passe à travers l'angle d'azimut.

8. Procédé selon la revendication 7, dans lequel l'étape (c) comprend en outre la commande du deuxième dispositif de régulation de portance (21a) de telle sorte qu'il est déplacé jusqu'à la nouvelle position déterminée avant que la deuxième pale (14B) ne passe à travers l'angle d'azimut.

9. Procédé selon l'une quelconque des revendications précédentes, comprenant en outre l'étape consistant à :
(d) commander une position de calage de la deuxième pale (14B) en fonction des conditions de vent détectées durant l'étape (a) quand la deuxième pale passe à travers l'angle d'azimut.

10. Procédé selon l'une quelconque des revendications précédentes, dans lequel le premier dispositif de régulation de portance est sensiblement à la même position radiale que le deuxième dispositif de régulation de portance.

11. Procédé selon l'une quelconque des revendications précédentes, dans lequel les première (14A) et deuxième pales (14B) comprennent chacune une pluralité de dispositifs de régulation de portance (21a, 21b, 21c) espacés dans une direction radiale, dans lequel chaque dispositif de régulation de portance sur la première pale (14A) est associé à un dispositif de régulation de portance sur la deuxième pale (14B) à une position radiale correspondante ; dans lequel
l'étape (a) comprend en outre la détection, à l'angle d'azimut, d'une condition de vent à chacune des positions radiales de la pluralité de dispositifs de régulation de portance quand la première pale passe à travers l'angle d'azimut ; et

l'étape (c) comprend en outre la commande de la pluralité de dispositifs de régulation de portance sur la deuxième pale de telle sorte que chaque dispositif de régulation de portance est commandé en fonction des conditions de vent détectées durant l'étape (a) aux positions radiales correspondantes, quand la deuxième pale passe à travers l'angle d'azimut.

12. Procédé selon la revendication 1, dans lequel les première (14A) et deuxième pales (14B) comprennent chacune une pluralité de dispositifs de régulation de portance (21a, 21b, 21c) espacés dans une direction radiale, dans lequel chaque dispositif de régulation de portance sur la première pale (14A) est associé à un dispositif de régulation de portance sur la deuxième pale (14B) à une position radiale correspondante et une pluralité d'espaces annulaires sont définis pour la pluralité de dispositifs de régulation de portance, dans lequel l'étape (b) comprend la génération d'une pluralité de modèles des conditions de vent pour chaque espace annulaire sur la base de conditions de vent détectées dans chaque espace annulaire ; et l'étape (c) comprend la commande des premier et deuxième dispositifs de régulation de portance en fonction des modèles des conditions de vent.

13. Procédé selon l'une quelconque des revendications 2 à 12, dans lequel les conditions de vent locales détectées comprennent au moins l'un de : la vitesse du vent, l'intensité de turbulence, le cisaillement du vent, la densité de l'air.

14. Procédé selon l'une quelconque des revendications précédentes, dans lequel le rotor comprend une troisième pale (14c) ayant un troisième dispositif de régulation de portance, le procédé comprenant en outre les étapes consistant à :

(e) détecter des conditions de vent à l'angle d'azimut quand la deuxième pale passe à travers l'angle d'azimut ; et
(f) commander le troisième dispositif de régulation de portance sur la troisième pale en fonction des conditions de vent détectées durant l'étape (a) et l'étape (e) quand la troisième pale passe à travers l'angle d'azimut.

15. Procédé selon l'une quelconque des revendications précédentes, dans lequel les dispositifs de régulation de portance sont l'un d'un volet de bord arrière, un volet de bord avant, un aileron, un déflecteur.

Figure 1

Figure 2a

Figure 2b

Figure 2c

Figure 3

Figure 4

Figure 5

Figure 6a

Figure 6b

Figure 6c

Figure 7

Figure 8

Figure 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007003403 A
- EP 2327876 A

- EP 2009063402 W